# FASCICULE DE BREVET EUROPEEN

(11) **EP 0 391 817 B1**
(45) Date de publication et mention de la délivrance du brevet: **22.06.1994**
(21) Numéro de dépôt: 90420168.8
(22) Date de dépôt: 03.04.1990
(51) Int. Cl.: B65D 23/02, B65D 83/14, B29C 49/24

(54) **Distributeur à poche**
Spender mit flexiblem Innensack
Dispensing container with flexible inner bag

(30) Priorité: 05.04.1989 FR 8905158
(43) Date de publication de la demande: 10.10.1990
(73) Titulaire: CEBAL S.A., F-92115 Clichy (FR)
(72) Inventeur: Rebeyrolle, Michel, F-51800 Sainte-Menehould (FR); Schneider, Bernard, F-51800 Sainte-Menehould (FR)
(74) Mandataire: Séraphin, Léon

(56) Documents cités:
- EP-A- 0 053 715
- EP-A- 0 179 538
- EP-A- 0 225 677
- DE-A- 2 135 746
- DE-A- 2 915 228
- FR-A- 2 205 886
- GB-A- 1 414 329
- US-A- 4 457 455

## Description

L'invention concerne un distributeur à poche pour produits liquides ou pâteux et une méthode de fabrication. Ce distributeur est apte à la distribution des produits dans divers domaines notamment pour produits alimentaires, pharmaceutiques, vétérinaires, cosmétiques, hygiéniques ou autres.

Les distributeurs dit "à poche" (ou à deux compartiments) sont utilisés quand le gaz propulseur et le produit distribué sont incompatibles ; la poche sert alors de barrière déformable mais étanche entre le gaz et le produit. Le gaz qui est enfermé sous pression entre la poche et l'enveloppe extérieure du récipient de conditionnement exerce une pression sur toute la surface de la poche et assure l'expulsion du produit conditionné, uniquement lors de l'ouverture de la valve du distributeur ; le gaz propulseur reste confiné dans le boîtier.

Cette structure exige une étanchéité parfaite, en particulier entre la poche et le système de distribution ; dans les systèmes classiques, des fuites peuvent intervenir entre le boîtier et la poche, au niveau du sertissage de la coupelle de valve.

Par ailleurs, l'introduction de la poche dans le boîtier du distributeur se heurte à quelques difficultés, surtout si la poche présente une différence de diamètre importante entre sa bague d'appui sur le boîtier et le corps du boîtier.

Enfin, il est souvent difficile d'obtenir des formes de poche, autres que cylindriques, ces dernières se prêtant moins bien à l'expulsion complète du produit.

Le distributeur selon l'invention permet d'éliminer ces inconvénients. Ce distributeur est donc constitué comme celà est connu par exemple par US-A-4457 455 ou EP-A-0 225 677 d'un boîtier extérieur réalisé en métal ou en matière plastique, ou en complexe métal-plastique de forme appropriée possédant un fond, muni d'une ouverture centrale, d'une surface latérale, généralement cylindrique avec une section droite circulaire ou elliptique, et muni d'une ouverture supérieure.
Son épaisseur est adaptée pour résister à la pression du gaz propulseur et compatible avec les normes internationales en vigueur.

Sur l'ouverture du boîtier est fixée de manière étanche par un procédé approprié, une tête en matière plastique comprenant une poche flexible ayant sensiblement la forme intérieure du boîtier, raccordée de façon continue (une pièce monobloc) à un dôme de forme appropriée dont la base a sensiblement les dimensions et la forme de l'ouverture supérieure du boîtier et qui présente à sa partie supérieure, soit une ouverture soit un goulot muni à sa partie supérieure, d'un rebord externe ou collerette (destiné à la fixation de la coupelle de la valve du distributeur).

La partie dôme peut avoir une forme quelconque : hémi-spérique, hémi-ellipsoïde, tronconique, ogivale, pyramidale, ou autres... ; son épaisseur est telle qu'elle résiste à la pression du gaz propulseur et compatible avec les normes de déformations des emballages pressurisés en vigueur.

La liaison entre la base du dôme et le sommet du boîtier est réalisée de façon connue par soudage, surmoulage, collage, etc...

Selon l'invention, la poche est caractérisée en ce qu'elle comporte sur sa paroi latérale des nervures ou surépaisseurs externes longitudinales, régulièrement espacées. La heuteur peut être égale de 1 à 2 fois l'épaisseur locale de la poche et de préférence plus prononcées côté dôme que côté fond.

Des nervures ou surépaisseurs semblables peuvent être disposées radialement sur le fond de la poche, sauf dans sa partie centrale, au voisinage de l'ouverture inférieure du boîtier. Celles-ci ont de préférence une hauteur égale à 2 ou 3 fois l'épaisseur locale de la poche.

Le rôle de ces surépaisseurs est double :
- Lors de l'expansion de la poche (voir le procédé décrit ci-après) elles évitent le placage intégral de la poche formée contre la paroi interne du boîtier et facilite ainsi l'introduction uniforme du gaz propulseur, à travers des "canaux" préexistants,
- Les surépaisseurs latérales constituent des zones plus rigides qui forment des arêtes de pliage lors de l'utilisation du distributeur, la poche se contractant en forme d'étoile. Elles sont de préférence de rigidité décroissante vers le fond favorisant une vidange depuis le bas de la poche. Leur nombre, de préférence pair peut varier de 4 à 16.

La partie tête en matière plastique est de préférence réalisée en PET, d'épaisseur comprise entre 1,5 et 3 mm.

Le corps du boîtier est soit en matière plastique suffisamment résistant à la chaleur, par exemple en polyimides, soit métallique, par exemple en aluminium, fer blanc, acier, ou tout autre matériau adéquat (verre, céramique, etc...). Il peut présenter une forme quelconque soit en section transversale, soit en section longitudinale.

Un procédé d'obtention du distributeur revendiqué consiste :
a) à former par moulage ou injection une préforme en matière thermoplastique comprenant un dôme muni d'un goulot (ou d'une ouverture) à sa partie supérieure sur lequel(laquelle) sera fixé le système de distribution du produit, ainsi que des moyens de liaison au corps du boîtier du distributeur, situés à la base du dôme et une embase de préférence creuse ou en forme de doigt de gant, solidaire et continue avec le reste de la pièce,
b) à chauffer l'embase de la préforme à une température de ramollissement pour bi-étirage du matériau thermoplastique utilisé,
c) à placer cette préforme en appui sur le boîtier du distributeur par ses moyens de liaison,
d) à étirer mécaniquement et souffler la poche à partir de l'embase, jusqu'à ce que celle-ci occupe une partie importante du volume intérieur du boîtier,
e) et à assurer la liaison de la préforme au boîtier par des moyens connus de l'art antérieur tels que collage, sertissage, soudage par friction ou "rotation", soudage par induction HF, etc,

Les opérations d) et e) peuvent être interverties ou encore concomittantes.

L'embase a, de préférence, une épaisseur initiale plus faible que les parois de la préforme. Celle-ci est généralement réalisée de préférence en PET ; dans ce cas l'embase est portée à une température comprise entre 130 et 180° C (et de préférence entre 150 et 170° C).

L'embase de cette préforme présente en section droite un profil intérieur circulaire, et peut présenter en coupe longitudinale une épaisseur variable, en fonction de la forme en coupe longitudinale du boîtier correspondant.

En section droite, le profil extérieur de l'embase hors nervures ou surépaisseurs est sensiblement homothétique de la section droite du boîtier correspondant, qui peut avoir une forme quelconque, en particulier elliptique ou polygonale.

De façon précise, l'épaisseur de l'embase est proportionnelle à ± 10 % près à la distance, vue en plan, séparant le contour extérieur de l'embase au contour intérieur du boîtier. Pour un boîtier à symétrie axiale, à un niveau donné, l'épaisseur de l'embase est donc constante.

L'embase comporte sur sa face latérale externe (ou sur la face externe de son fond) des nervures longitudinales uniformes ou de hauteur décroissante du haut en bas de l'embase (ou radiales) dont la hauteur h vaut 2 à 3 fois l'épaisseur locale de l'embase.

Le chauffage de l'embase de la préforme peut être effectué par tout moyen connu tel que lampes à quartz, four classique, four micro-ondes, immersion dans un liquide ou gaz chaud, etc...

Lorsque le boîtier est métallique ou comporte au moins une partie métallique, on peut intervertir les opérations b) et c) ci-dessus, le chauffage par induction de la partie supérieure du boîtier permettant le chauffage indirect de l'embase de la préforme (le boîtier jouant le rôle de susceptor).

Cette opération de chauffage peut être simultanément utilisée pour réaliser la liaison boîtier-dôme : par exemple en utilisant un "hot-melt".

L'invention sera mieux comprise à l'aide des exemples suivants illustrés par les figures 1 à 5.

La fig. 1 représente le détail de la fixation de la poche d'un distributeur à poche, selon l'art antérieur.

La fig. 2 représente un distributeur selon l'invention à corps métallique, vu en coupe longitudinale.

La fig. 3 représente une coupe longitudinale d'un distributeur selon l'invention dont le corps est en matière plastique.

La fig. 4 représente une vue de dessous d'une préforme analogue à celle de la fig. 3 destinée à former une poche à nervures.

La fig. 5 représente une coupe transversale d'une embase destinée à former une poche dans un boîtier de section carrée

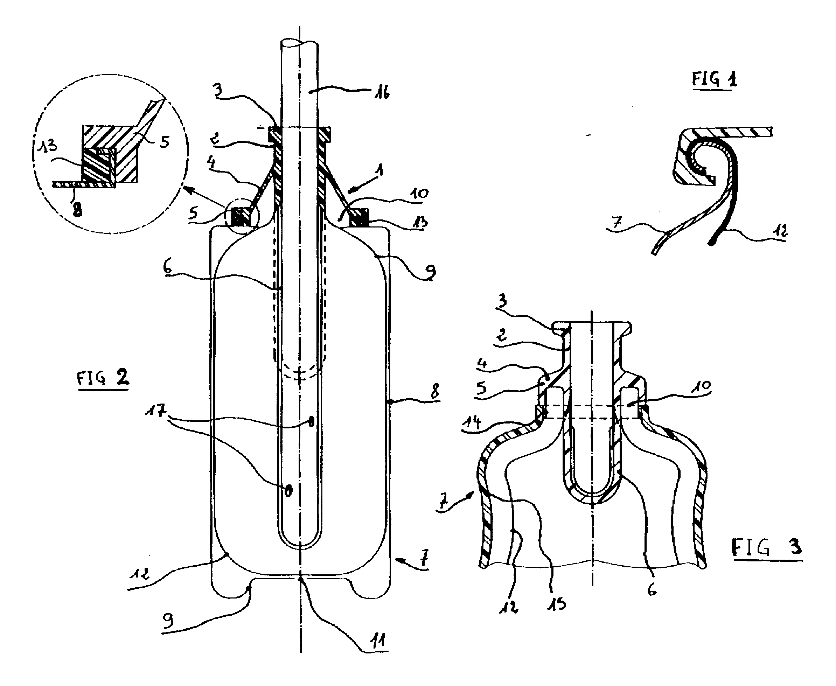

### EXEMPLE 1 (fig. 2)

Une préforme 1 comportant un goulot cylindrique 2 muni d'une collerette 3, d'un dôme 4, comportant des moyens de fixation 5 et un doigt de gant 6 en continuité avec le goulot 2, est réalisé en PET, par injection.
Le boîtier 7 en aluminium est constitué par une enveloppe cylindrique 8 raccordée à un fond 9 et présentant une ouverture supérieure 10 pour la fixation de la préforme 1 et d'une ouverture 11 sur le fond pour introduction du gaz propulseur. Cette dernière ouverture est fermée ultérieurement par un bouchon étanche (non représenté).
La partie doigt de gant 6 est portée à la température de 150° C par infra-rouge (ou air chaud) dans une enceinte spéciale, hors du boîtier puis la préforme 1 est placée sur le boîtier 7 ; le doigt de gant 6 est d'abord étiré à l'aide d'un poinçon tubulaire 16 muni d'ouvertures annulaires 17, jusqu'à la position (I), puis soufflé en forme de poche 12 à l'intérieur du boîtier 7 à l'aide d'air comprimé, dont la pression est adaptée au matériau à former (1,5 à 3 MPa).
La préforme 1 est ensuite solidarisée au corps du boîtier 7 par surmoulage 13 (injection de plastique).

### EXEMPLE 2

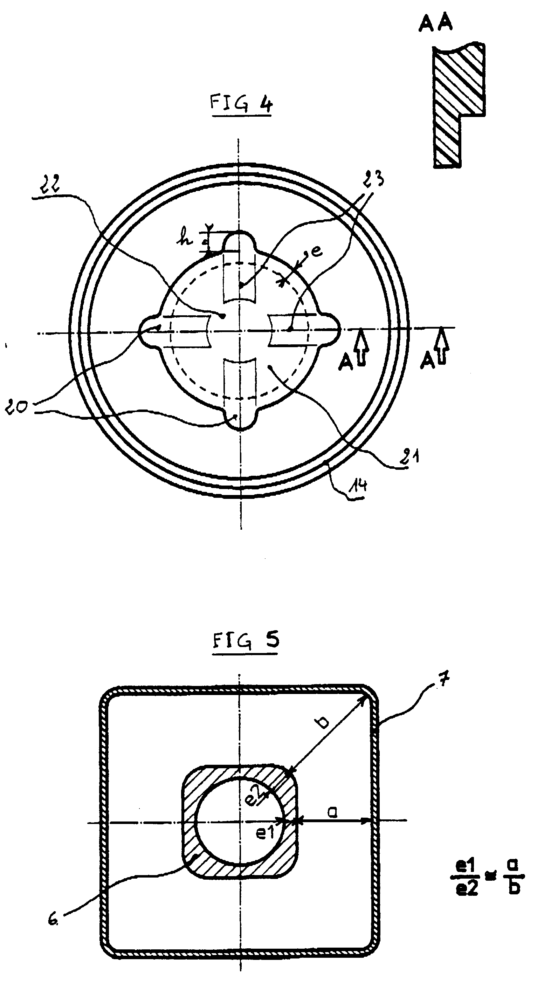

La figure 3 représente une coupe longitudinale d'un distributeur selon l'invention dont le corps est en matière plastique et la fig. 4 représente une vue de dessous du dôme de la fig. 3.
Une préforme 1 en PET comporte sur la face externe du doigt de gants 6 quatre nervures 20 de hauteur h = 2,5 mm pour une épaisseur e = 1 mm, qui se prolongent de manière radiale en 23 sur le fond 21 de la préforme, sans en occuper le centre 22. Cette préforme est chauffée à 150° C dans sa partie 6 puis positionnée sur le boîtier 15 du distributeur où elle y est scellée par soudage par friction en 14. On réalise en même temps que le soudage, l'étirage et le soufflage de la poche 12.

## Revendications

1. Distributeur à poche comprenant un boîtier métallique ou en matière plastique ou en complexe métal-plastique (7,15) et une tête en matière plastique liée de façon continue à une poche flexible (12) ayant sensiblement la forme intérieure du boîtier (7) et comportant une partie en forme de dôme (4) raccordée de façon étanche par sa base (5) à l'ouverture (10) du boîtier, caractérisé en ce que la poche (12) présente sur sa surface externe des nervures (20) ou surépaisseurs longitudinales, régulièrement espacées.

2. Distributeur selon la revendication 1 caractérisé en ce que la hauteur des nervures est décroissante du haut vers le bas.

3. Distributeur à poche selon l'une des revendications 1 à 2 caractérisé en ce que le fond de la poche porte des nervures ou surépaisseurs externes disposées radialement sans atteindre la zone centrale.

4. Distributeur selon l'une des revendications 1 à 3 caractérisé en ce que le nombre de nervures ou surépaisseurs est compris entre 4 et 16.

5. Distributeur selon l'une des revendications 1 à 4 caractérisé en ce que la hauteur des nervures longitudinales vaut de 1 à 2 fois l'épaisseur locale de la poche.

6. Distributeur selon l'une des revendications 1 à 5 caractérisé en ce que la hauteur des nervures ou surépaisseurs radiales vaut de 2 à 3 fois l'épaisseur locale de la poche.

## Patentansprüche

1. Spender mit Innenbeutel, der ein Gehäuse aus Metall, aus Kunststoff oder aus Metall/Kunststoff-Verbundwerkstoff (7, 15) sowie ein Oberteil aus Kunststoff umfaßt, das durchgehend mit einem nahezu die Innenform des Gehäuses aufweisenden flexiblen Beutel (12) verbunden ist und einen kuppelförmigen Bereich (4) umfaßt, der durch seine Basis (5) abgedichtet mit der Öffnung (10) des Gehäuses verbunden ist,
**dadurch** **gekennzeichnet,**
daß der Beutel (12) auf seiner Außenfläche gleichmäßig beabstandete longitudinale Wulste oder Rippen (20) aufweist.

2. Spender nach Anspruch 1, dadurch gekennzeichnet, daß die Höhe der Rippen von oben nach unten abnimmt.

3. Spender nach einem der Ansprüche 1 bis 2, dadurch gekennzeichnet, daß der Boden des Beutels radial angeordnete, den zentralen Bereich nicht erreichende äußere Wulste oder Rippen aufweist.

4. Spender nach einem der Ansprüche 1 bis 3, dadurch gekennzeichnet, daß die Anzahl der Rippen oder Wulste zwischen 4 und 16 beträgt.

5. Spender nach einem der Ansprüche 1 bis 4, dadurch gekennzeichnet, daß die Höhe der longitudinalen Rippen das 1 bis 2-fache der örtlichen Dicke des Beutels ist.

6. Spender nach einem der Ansprüche 1 bis 5, dadurch gekennzeichnet, daß die Höhe der radialen Wulste oder Rippen das 2 bis 3-fache der örtlichen Dicke des Beutels ist.

## Claims

1. A pocketed distributor comprising a casing of metal or plastics material or a metal/plastics complex (7, 15) and a head of plastics material continuously connected to a flexible pocket (12) which is substantially shaped like the inside of the casing (7) and comprising a dome-shaped part (4) connected in sealing-tight manner by its base (5) to the aperture (10) of the casing, characterised in that the pocket (12) has on its outer surface regularly spaced longitudinal ribs (20) or thickened portions.

2. A distributor according to Claim 1, characterised in that the height of the ribs decreases from the top downwardly.

3. A pocketed distributor according to one of Claims 1 to 2, characterised in that the bottom of the pocket carries external ribs or thickened portions which are disposed radially without extending as far as the central zone.

4. A distributor according to one of Claims 1 to 3, characterised in that the number of ribs or thickened portions is comprised between 4 and 16.

5. A distributor according to one of Claims 1 to 4, characterised in that the height of the longitudinal ribs is equivalent to 1 to 2 times the local thickness of the pocket.

6. A distributor according to one of Claims 1 to 5, characterised in that the height of the radial ribs or thickened portions is equal to 2 to 3 times the local thickness of the pocket.
